# EUROPÄISCHE PATENTSCHRIFT

(11) **EP 3 678 915 B1**
(45) Veröffentlichungstag und Bekanntmachung des Hinweises auf die Patenterteilung: **30.03.2022**
(21) Anmeldenummer: 18769950.9
(22) Anmeldetag: 05.09.2018
(51) Int. Cl.: B61B 12/00, F16B 7/04, F16B 11/00

(54) **ECKVERBINDUNG FÜR TRAGELEMENTE EINER SEILBAHNKABINE**
CORNER CONNECTION FOR SUPPORTING ELEMENTS OF A CABLEWAY CABIN
RACCORDEMENT D'ANGLE POUR ÉLÉMENTS DE SUPPORT D'UNE CABINE DE TÉLÉPHÉRIQUE

(30) Priorität: 06.09.2017 CH 11082017
(43) Veröffentlichungstag der Anmeldung: 15.07.2020
(73) Patentinhaber: Ropetrans AG, 6343 Rotkreuz (CH)
(72) Erfinder: FUCHS, Christoph, 6103 Schwarzenberg (CH)
(74) Vertreter: Liebetanz, Michael
(86) Internationale Anmeldenummer: PCT/EP2018/073892
(87) Internationale Veröffentlichungsnummer: WO 2019/048494

(56) Entgegenhaltungen:
- EP-A1- 1 619 099
- WO-A1-84/04283
- CH-A5- 626 842
- DE-A1- 19 929 057
- DE-A1-102014 014 768
- DE-A1-102015 015 895

## Beschreibung

Die Erfindung betrifft eine Eckverbindung für Tragelemente einer Seilbahnkabine, insbesondere für Seilbahnkabinen, die unter extremer Kälte oder Hitze zum Einsatz kommen, gemäss dem Oberbegriff des Anspruchs 1.

Seilbahnkabinen, wie sie z. B. in der CH 626842 beschrieben sind, müssen extremen Witterungsbedingungen Stand halten, von starker Kälte in Wintersportgebieten bis zu grosser Hitze unter Sonneneinstrahlung. Tragelemente der Seilbahnkabine liegen oftmals an der Aussenfläche der Kabine und sind diesen Bedingungen daher besonders ausgesetzt.

Zusätzlich unterliegen die Kabinen einer hohen Ermüdungsbeanspruchung. Gleichzeitig bilden sie den Tragrahmen der Kabine und unterliegen deshalb hohen Sicherheitsanforderungen, wie etwa einer Lebensdauer von mindestens 30 Jahren.

Für eine sichere Verbindung von tragenden Elementen der Seilbahnkabine sind Eckverbindungsstücke bekannt, die Tragelemente über Eck miteinander verbinden und für einen stabilen Tragrahmen sorgen sollen. In der Regel wird das gewinkelt ausgebildete Eckverbindungsstück mit seinen Enden jeweils in ein Tragelement eingeschoben und dann mit diesem verschraubt, vernietet oder verschweisst.

Weiter ist aus der EP 1619099 A2 ein Eckverbindungsteil bekannt, das zueinander gewinkelte Stutzen aufweist, die jeweils formschlüssig in ein Ende eines Tragelements eingepresst werden. Der Aussendurchmesser eines Stutzens ist konisch ausgebildet und mit dem Innendurchmesser des Tragelements derart abgestimmt, dass nach dem Einpressen zwischen Stutzen und Tragelement eine kraftschlüssige Verbindung entsteht, die den Stutzen sicher in dem Tragelement hält. Zusätzliche Sicherungselemente, wie Schrauben oder Nieten, sind nicht erforderlich.

Das Dokument EP 1 619 099 A1 beschreibt eine Eckverbindung zwischen Tragelementen einer Seilbahnkabine, wobei ein Tragelement als längliche Strebe mit einem Hohlende ausgebildet ist, und ein gewinkeltes Anschlusselement mit einem Stutzen vorgesehen ist, der formschlüssig in das Hohlende des Tragelements einführbar ist.

Das Dokument DE 199 29 057 A1 beschreibt eine Fahrzeugtragstruktur, bei der Rahmenprofile mittels Knotenelementen und Steckverbindern und an Anschlussbauteile angefügt werden. In einem Überlappungsbereich zwischen den Steckverbindern und sind auf dem Umfang mehrere Distanzmittel in Form von Stegen vorgesehen, mit denen der innen liegende Steckverbinder im außen liegenden Steckverbinder derart ausgerichtet wird, dass zwischen diesen Bauteilen ein Kleberbett verbleibt. Das Kleberbett wird von Zwischenräumen zwischen den Stegen und Verbindungkanälen gebildet.

Weiter ist es aus der EP 1619099 A2 bekannt, dass ein Stutzen eine zylindrische Form aufweist, dessen Aussendurchmesser nur unwesentlich kleiner ist als der Innendurchmesser eines Tragelements in das er eingesetzt wird. In dieser Variante weist der Stutzen nach einem Endabschnitt mit unwesentlich kleinerem Durchmesser eine Einschnürung mit einem noch kleineren Durchmesser auf. Nach dem Zusammenfügen von Tragelement und Stutzen kann der Bereich der Einschnürung mit einem elastischen Klebstoff gefüllt werden. Zum Einbringen des Klebstoffs kann das Tragelement oder der Stutzen eine Öffnung aufweisen, durch die der Klebstoff in den Zwischenraum zwischen Innendurchmesser des Tragelements und Aussendurchmesser der Einschnürung eingespritzt wird. Anschliessend wird die Öffnung mit einer Schraube verschlossen. Die Herstellung einer derartigen Verbindung benötigt eine Vielzahl von Arbeitsschritten und ist daher aufwendig und kostspielig.

Es ist deshalb eine Aufgabe der vorliegenden Erfindung, eine Eckverbindung für Seilbahnkabinen zu schaffen, die einfach und schnell hergestellt werden kann, die extremen Bedingungen Stand hält und die eine sichere Konstruktion der Seilbahnkabine gewährleistet.

Diese Aufgabe wird erfindungsgemäss durch eine Eckverbindung nach Anspruch 1 und eine Seilbahnkabine nach Anspruch 12 gelöst. Vorteilhafte Ausgestaltungen und
unterschiedliche Ausführungsformen der Erfindung gehen aus den Unteransprüchen hervor.

Eine Eckverbindung zwischen Tragelementen einer Seilbahnkabine nach der vorliegenden Erfindung weist wenigstens ein Tragelement, z. B. in Form einer länglichen Strebe, und ein gewinkeltes Anschlusselement mit einem Stutzen auf. Das Tragelement ist zumindest an einem Ende röhrenartig mit einem Hohlende ausgebildet. Der Stutzen des Anschlusselements ist formschlüssig in das Hohlende des Tragelements einführbar. Hohlende und Stutzen bilden somit eine formschlüssige Steckverbindung. Erfindungsgemäss sind eine Innenform des Hohlendes und eine Aussenform des Stutzens kantig ausgebildet. Wenigstens zwei sich gegenüberliegende Flächen von Stutzen und Hohlende sind derart formschlüssig vorgesehen, dass zwischen Innenfläche des Hohlendes und Aussenfläche des Stutzens ein Spalt verbleibt. Vorzugsweise bilden drei sich gegenüberliegende Flächen von Stutzen und Hohlende einen solchen Spalt. Die Innenfläche des Hohlendes und die Aussenfläche des Stutzen müssen nicht an allen Seiten des Formschlusses aufeinander liegen. In dem Spalt ist zwischen den sich gegenüberliegenden Seiten von Hohlende und Stutzen ein Klebematerial vorgesehen. Die Innenfläche des Hohlendes und die Aussenfläche des Stutzen bilden somit Klebeflächen der Eckverbindung und verkleben das Tragelement und das Anschlusselement wenigstens an sich gegenüberliegenden Umfangsseiten fest miteinander. Vorzugsweise sind zwei Spalten vorgesehen, die an sich gegenüberliegenden inneren, bzw. äusseren Flächen von Hohlende und Stutzen liegen.

Vorzugsweise weist wenigstens eine Fläche von Hohlende oder Stutzen ein Loch auf, das zu wenigstens einem Spalt führt und zum Einführen von Klebematerial dient. Das Klebematerial kann in einfacher Weise durch das wenigstens eine Loch in die Spalten eingebracht, vorzugsweise injiziert, werden. Vorteilhaft ist ein einziges Loch vorgesehen, über das die Spalten symmetrisch mit Klebematerial gefüllt werden. Das Klebematerial bildet eine zuverlässige Fixierung des Anschlusselements im Tragelement, die auf bestimmte Anforderungen an die Seilbahnkabine angepasst werden kann, indem ein passendes Klebematerial ausgewählt wird.

Alternativ zu wenigstens einem Loch in einer Aussenfläche des Stutzen kann der Spalt zwischen Stutzen und Hohlende vom Endbereich des Hohlendes her zugänglich sein und mit Klebematerial gefüllt werden.

Gemäss einer Ausführungsform der Eckverbindung nach der Erfindung sind die Aussenform des Stutzens und die Innenform des Hohlendes viereckartig ausgebildet. Vorzugsweise sind die Querschnitte von Hohlende und Stutzen trapezförmig ausgebildet. Vorteilhaft sind Klebeflächen an mindestens drei Seiten des Trapez vorgesehen. Eine derartige Kontur von Hohlende und Stutzen bietet eine ausgezeichnete Positionierung zwischen Tragelement und Anschlusselement und kann als Verdrehsicherung dienen.

Das Anschlusselement weist an einem Ende den Stutzen auf. An einem anderen Ende kann das Anschlusselement als Tragelement ausgebildet sein. Alternativ kann das andere Ende ebenfalls einen Stutzen für den Anschluss eines weiteren Tragelements bilden. Das Anschlusselement kann auch drei oder vier Enden aufweisen, wobei die Enden jeweils als Tragelement oder als Stutzen vorgesehen sein können.

Das Anschlusselement weist zwischen dem Stutzen und einem dem Stutzen gegenüberliegenden Ende zum Beispiel einen Winkel zwischen 0° und 135°, vorzugsweise zwischen 30° und 90°, auf. Weiter überlappen das Hohlende des Tragelements und der Stutzen des Anschlusselements vorteilhaft wenigstens über eine Länge von 50mm, vorzugsweise von wenigstens 100 mm, wenn der Stutzen in das Hohlende eingeführt ist. Die Innenfläche des Hohlendes und die Aussenfläche des Stutzens, welche Klebeflächen bilden, betragen zum Beispiel wenigstens eine Fläche von 10'000 mm², vorzugsweise von wenigstens 20'000 mm². Mit diesen Dimensionen ist eine sichere Fixierung von Tragelement und Anschlusselement gegeben.

In einer bevorzugten Ausführungsform der Eckverbindung sind das Anschlusselement und das Tragelement hohl ausgebildet. Somit können elektrische Leitungen durch die Tragstruktur der Seilbahnkabine geführt werden.

Vorteilhaft ist der Stutzen U-förmig ausgebildet und somit an einer Seite offen. Durch die offene Seite ist das Innere des Anschlusselements in einfacher Weise zugänglich, beispielsweise zum Einlegen von Kabeln oder sonstigen Leitungen. Vorteilhaft ist das Einführloch zum Einbringen von Klebematerial in die Spalten durch ein Loch in einem U-Boden gegeben, der zwischen U-Schenkeln (7, 7') des U-förmigen Stutzens (4) angeordnet ist. Auf der Aussenseite des Hohlendes muss somit in dieser Ausführungsform kein Loch vorgesehen sein, da Klebematerial durch das offene Ende des Hohlendes und das Einführloch zwischen Hohlende und Stutzen eingebracht werden kann.

Bei einer vorteilhaften Ausführungsform einer Eckverbindung nach der vorliegenden Erfindung weist das Hohlende eine innere Längsfläche auf, an deren äusseren Längsbereichen jeweils eine Kuhle verläuft. Die Kuhlen sind derart dimensioniert, dass Kanten des Stutzens derart in den Kuhlen zu liegen kommen, dass der Stutzen zentriert im Hohlende angeordnet ist. Somit verbleiben zwei symmetrische Spalten zwischen den sich gegenüberliegenden Innenflächen des Hohlendes und Aussenflächen des Stutzens. Vorzugsweise sind die Kuhlen der inneren Längsfläche beabstandet zu den angrenzenden Innenflächen des Hohlendes, welche die Klebeflächen bildenden. Die Aussenflächen der U-Schenkel des U-förmigen Stutzen bilden in dieser Ausführungsform die Klebeflächen des Anschlusselements und die Enden der U-Schenkel kommen in den Kuhlen des Hohlendes zu liegen. Die Enden der U-Schenkel können angeschrägt sein, um ein besseres gleiten und zentrieren in den Kuhlen zu ermöglichen.

Ein Kabel kann in einfacher Weise zwischen die U-Schenkel eingelegt und gemeinsam mit dem Stutzen in das Hohlende eingeführt werden. Dies ist nicht nur bei der Erstmontage möglich, sondern kann jederzeit erfolgen, wie etwa bei Wartungsarbeiten bei einer in Betrieb befindlichen Seilbahn. Die Enden der U-Schenkel werden entlang der Kuhlen in das Tragelement eingeführt. Der U-Boden des Stutzen kann dabei an der Fläche des Hohlendes anliegen, die der Fläche mit den Kuhlen gegenüber liegt. In eingeführtem Zustand ist der Stutzen des Anschlusselements im Hohlende des Tragelements zentriert, sodass an gegenüberliegenden Seiten ein Spalt zwischen Anschlusselement und Tragelement verbleibt. Klebstoff kann nun z. B. durch Injektion in den Spalt eingebracht werden, um Tragelement und Anschlusselement fest miteinander zu verbinden.

Die Erfindung umfasst zudem eine Seilbahnkabine mit einer oben beschriebenen Eckverbindung.

Die Erfindung wird im Folgenden anhand der Figuren dargestellt, die lediglich zur Erläuterung dienen und nicht einschränkend auszulegen sind. Aus den Zeichnungen offenbar werdende Merkmale der Erfindung sollen als zur Offenbarung der Erfindung gehörend betrachtet werden. In den Zeichnungen zeigen:
- Fig. 1: eine dreidimensionale, teilweise durchsichtige Ansicht einer Eckverbindung nach der vorliegenden Erfindung,
- Fig. 2: einen Querschnitt durch die Eckverbindung gemäss Figur 1 und
- Fig. 3: einen Rahmen einer Seilbahnkabine mit einer Eckverbindung gemäss der vorliegenden Erfindung.

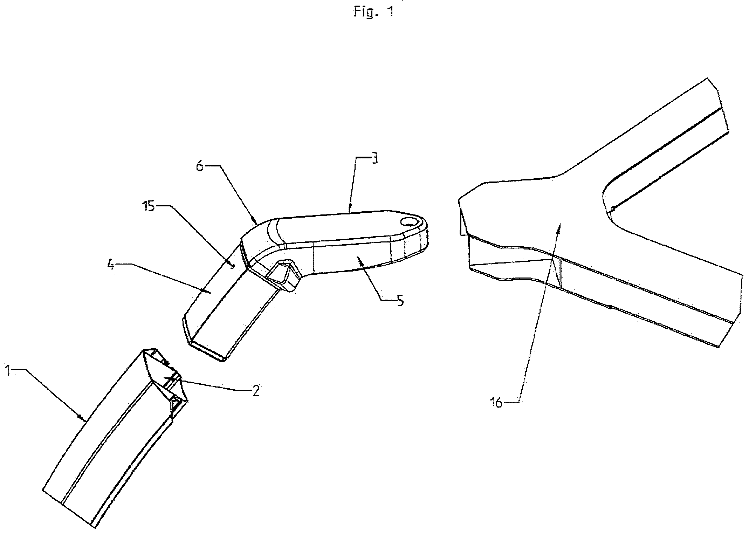

Figur 1 zeigt eine Eckverbindung wie sie gemäss der Erfindung zwischen Tragelementen einer Seilbahnkabine verwendet wird. Die Eckverbindung umfasst ein Tragelement 1 mit einem Hohlende 2 und ein gewinkeltes Anschlusselement 3 mit einem Stutzen 4. Das Anschlusselement 3 weist an seinem dem Stutzen 4 gegenüber liegenden Ende ein Anschlussstück 5 auf, das mit einem Dachrahmen 16 der Seilbahnkabine verbunden werden kann. Der Stutzen 4 und das Anschlussstück 5 sind über einen Winkelbereich 6 miteinander verbunden. Der Winkelbereich 6 definiert den Winkel der Eckverbindung von Tragelement 1 und Anschlusselement 3. In anderen Varianten einer Eckverbindung nach der Erfindung kann anstelle des Anschlussstücks 5 eine Tragelementstrebe oder ein weiterer Stutzen 4 am Anschlusselement 3 vorgesehen sein. In einer Fläche des Stutzens 4 ist ein Loch 15 zum Einbringen von Klebematerial vorgesehen.

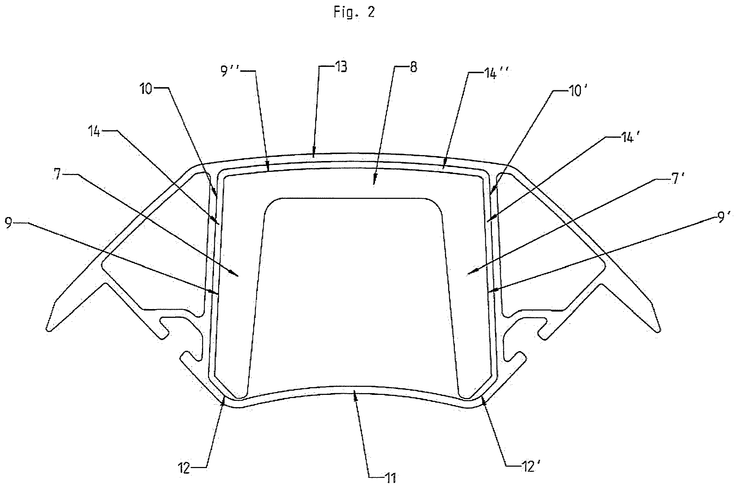

In Figur 2 ist ein Querschnitt durch das Hohlende 2 des Tragelements 1 mit dem eingesetzten Stutzen 4 des Anschlusselements 3 gezeigt, wobei der Stutzen 4 formschlüssig in das Hohlende 2 eingeführt ist. Daraus wird ersichtlich, dass eine Innenform des Hohlendes 2 und eine Aussenform des Stutzens 4 kantig ausgebildet sind, nämlich viereckig mit gleichschenkliger Trapezform. Grundsätzlich sind auch andere kantige Formgebungen möglich.

Weiter ist ersichtlich, dass das Anschlusselement 3 U-förmig ausgebildet ist und zwischen seinen U-Schenkeln 7 und 7' und dem U-Boden 8 hohl ist. An der dem U-Boden 8 gegenüberliegenden Seite ist der Stutzen 4 offen. Dadurch ist der Innenraum des Anschlusselements 3 zugänglich. Die U-Schenkel 7 und 7' bilden zwei sich gegenüberliegende Aussenflächen 9 und 9' und der U-Boden 8 bildet eine Aussenfläche 9", die mit den Flächen 9 und 9' verbunden ist.. Der U-Boden 8 weist das Loch 15 zum Einführen von Klebematerial auf (in Figur 2 nicht gezeigt).

Das Hohlende 2 weist zwei sich gegenüberliegende Innenflächen 10 und 10' auf, welche die Trapezschenkel bilden. Eine in Längsrichtung verlaufende Grundfläche 11 des Hohlendes 2 weist an ihren äusseren Längsbereichen jeweils eine Kuhle 12 und 12' auf, die im Wesentlichen als Rille in der Grundfläche 11 ausgebildet sind. Die Kuhlen 12 und 12' sind beabstandet von den angrenzenden Innenflächen 10 und 10' angeordnet. Gegenüber der Grundfläche 11 verläuft eine im Wesentlichen parallel zur Grundfläche 11 verlaufende Fläche 13 mit einer Innenfläche 10", so dass die Innenflächen 10, 10' und 10" und die Grundfläche 11 ein im Umfang geschlossenes Hohlende 2 bilden. An seinem Ende ist das Hohlende 2 jedoch offen, so dass das Anschlusselement 3 eingeschoben werden kann.

Die Aussenflächen 9, 9' und 9" des Stutzens 3 sind derart formschlüssig vorgesehen, dass zwischen einer Innenfläche 10, 10' bzw. 10", des Hohlendes 2 und einer Aussenfläche 9, 9' bzw. 9" des Stutzens 4 jeweils ein vom Ende des Tragelements 1 her zugänglicher Spalt 14, 14' bzw. 14" verbleibt. In dem Spalt ist ein Klebematerial vorgesehen, welches das Tragelement 1 und das Anschlusselement 3 fest miteinander verbindet. Die Aussenflächen 9, 9' und 9" und die Innenflächen 10, 10' und 10" bilden somit Klebeflächen der Eckverbindung. Als Klebematerial kann z. B. Ein- oder ZweiKomponenten Klebstoff verwendet werden. Das Klebematerial kann durch das Loch 15 eingebracht werden und verteilt sich zu beiden Seiten in den Spalten 14, 14' und 14" zwischen den Innenflächen 10, 10' und 10" und den Aussenflächen 9, 9' und 9".

Die U-Schenkel 7 und 7' ragen mit ihren Enden in die Kuhlen 12 und 12'. Der U-Boden 8 kommt an der gegenüberliegenden Fläche 13 des Hohlendes 2 zu liegen. Die Kuhlen 12 und 12' und die zu diesen gegenüber angeordnete Fläche 13 bilden eine Führung für den Stutzen 4 innerhalb des Hohlendes 2. Der Stutzen 4 wird durch die Führung derart innerhalb des Hohlendes 2 zentriert, dass die beiden Spalten 14 und 14' zumindest annähernd gleich breit sind.

Der Winkel zwischen der Längsachse des Anschlussstücks 5 und der Längsachse des Stutzens 4 beträgt in dieser Ausführungsform ca. 60°. Grundsätzlich können jedoch auch andere Winkel vorgesehen werden. Die Klebeflächen erstrecken sich über die gesamte Länge des Stutzens 4 und über die Breite der Innenflächen 10, 10' und 10".

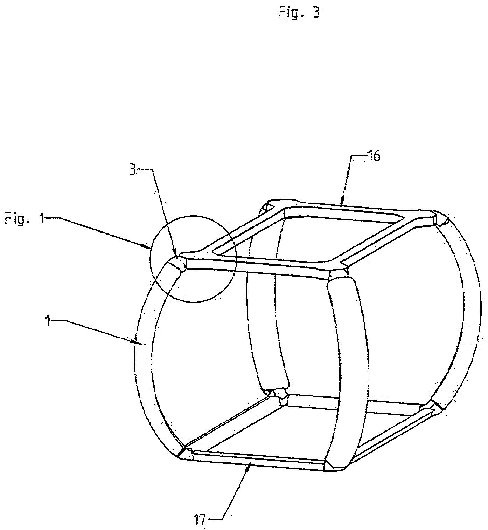

In Figur 3 ist ein Rahmen einer Seilbahnkabine gezeigt, bei der an den acht Ecken eine Eckverbindung nach der vorliegenden Erfindung verwendet wird. Die Tragelemente 1 werden über die Anschlusselemente 3 mit dem Dachrahmen 16 verbunden. In analoger Weise wird der Bodenrahmen 17 mit den Tragelementen 1 verbunden.

Eine Eckverbindung nach der vorliegenden Erfindung erlaubt ein schnelles Fixieren der Tragelemente des Rahmens einer Seilbahnkabine mit einander oder mit anderen Elementen der Kabine. Die Formgebung der ineinander passenden Tragelemente und Anschlusselemente gewährleistet eine sichere Ausrichtung von Tragelement und Anschlusselement zueinander und unterbindet eine Rotation der Elemente zueinander. Das Klebematerial kann schnell und effektiv in die Spalten eingebracht werden . Es hat sich gezeigt, dass eine Verklebung an drei Seiten der Eckverbindung eine zuverlässige Fixierung ermöglicht.

### Bezugszeichenlegende

- 1: Tragelement
- 2: Hohlende
- 3: Anschlusselement
- 4: Stutzen
- 5: Anschlussstück
- 6: Winkelbereich
- 7, 7': U-Schenkel
- 8: U-Boden
- 9, 9', 9": Aussenfläche
- 10, 10', 10'': Innenfläche
- 11: Grundfläche
- 12, 12': Kuhle
- 13: Fläche
- 14, 14', 14": Spalt
- 15: Loch
- 16: Dachrahmen
- 17: Bodenrahmen

## Patentansprüche

1. Eckverbindung zwischen Tragelementen einer Seilbahnkabine, wobei die Eckverbindung ein Tragelement (1) umfasst, das als längliche Strebe mit einem Hohlende (2) ausgebildet ist, und wobei die Eckverbindung ein gewinkeltes Anschlusselement (3) mit einem Stutzen (4) umfasst, der formschlüssig in das Hohlende (2) des Tragelements (1) einführbar ist, **dadurch gekennzeichnet, dass** eine Innenform des Hohlendes (2) und eine Aussenform des Stutzens (4) kantig ausgebildet sind und wenigstens an zwei sich gegenüberliegenden Flächen derart formschlüssig vorgesehen sind, dass zwischen Innenfläche (10, 10') des Hohlendes (2) und Aussenfläche (9, 9') des Stutzens (4) ein Spalt (14, 14') verbleibt, wobei in dem Spalt (14, 14') ein Klebematerial vorgesehen ist.

2. Eckverbindung nach Anspruch 1, **dadurch gekennzeichnet, dass** wenigstens eine Fläche von Hohlende (2) oder Stutzen (4) ein Loch aufweist, das zu wenigstens einem Spalt (14, 14', 14") führt und zum Einführen von Klebematerial dient.

3. Eckverbindung nach Anspruch 1 oder 2, **dadurch gekennzeichnet, dass** die Aussenform des Stutzens (4) und die Innenform des Hohlendes (2) viereckartig ausgebildet sind.

4. Eckverbindung nach einem der vorhergehenden Ansprüche, **dadurch gekennzeichnet, dass** das Anschlusselement (3) an einem Ende den Stutzen (4) aufweist und an einem anderen Ende ein Tragelement oder Anschlussstück (5) bildet und/oder an mehreren Enden einen Stutzen aufweist.

5. Eckverbindung nach einem der vorhergehenden Ansprüche, **dadurch gekennzeichnet, dass** die Innenfläche (10, 10', 10") des Hohlendes (2) und die Aussenfläche (9, 9', 9") des Stutzens (4) Klebeflächen bilden, deren Fläche wenigstens 50'000 mm² betragen.

6. Eckverbindung nach einem der vorhergehenden Ansprüche, **dadurch gekennzeichnet, dass** das Anschlusselement (3) hohl ausgebildet ist.

7. Eckverbindung nach einem der vorhergehenden Ansprüche, **dadurch gekennzeichnet, dass** der Stutzen (4) U-förmig mit drei Aussenflächen (9, 9', 9") ausgebildet ist.

8. Eckverbindung nach dem vorhergehenden Anspruch, **dadurch gekennzeichnet, dass** die drei Aussenflächen (9, 9', 9") des U-förmigen Stutzens (4) als Klebeflächen dienen.

9. Eckverbindung nach dem vorhergehenden Anspruch, **dadurch gekennzeichnet, dass** ein Loch (15) zum Einbringen von Klebematerial in einem U-Boden (8), der zwischen U-Schenkeln (7, 7') des U-förmigen Stutzens (4) angeordnet ist, vorgesehen ist.

10. Eckverbindung nach einem der vorhergehenden Ansprüche, **dadurch gekennzeichnet, dass** das Hohlende (2) eine innere Längsfläche (11) aufweist, an deren äusseren Längsbereichen jeweils eine Kuhle (12, 12') verläuft, welche derart dimensioniert sind, dass Kanten des Stutzens (4) derart in den Kuhlen (12, 12') zu liegen kommen, dass der Stutzen (4) zentriert im Hohlende (2) angeordnet ist.

11. Eckverbindung nach den Ansprüchen 7 und 10, **dadurch gekennzeichnet, dass** die Kuhlen (12, 12') zu den Innenflächen (10, 10') des Hohlendes (2) beabstandet sind und die Enden der U-Schenkel (7, 7') in den Kuhlen (12, 12') des Hohlendes (2) zu liegen kommen.

12. Seilbahnkabine mit einer Eckverbindung nach einem der vorhergehenden Ansprüche 1 bis 11.

## Claims

1. A corner connection between supporting elements of a cableway cabin, the corner connection comprising a support element (1) which is designed as an elongated strut with a hollow end (2), and the corner connection comprising an angled connecting element (3) with a connecting piece (4) which can be introduced in a form-fitting manner into the hollow end (2) of the support element (1), **characterized in that** an inner shape of the hollow end (2) and an outer shape of the connecting piece (4) have an angular design and are provided in a form-fitting manner at least on two mutually opposite surfaces in such a way that a gap (14, 14') remains between the inner surface (10, 10') of the hollow end (2) and the outer surface (9, 9') of the connecting piece (4), an adhesive material being provided in the gap (14, 14').

2. The corner connection according to claim 1, **characterized in that** at least one surface of the hollow end (2) or the connecting piece (4) has a hole leading to at least one gap (14, 14', 14") and is used for introducing adhesive material.

3. The corner connection according to claim 1 or 2, **characterized in that** the outer shape of the connecting piece (4) and the inner shape of the hollow end (2) have a quadrangular design.

4. The corner connection according to one of the preceding claims, **characterized in that** the connecting element (3) has the connecting piece (4) on one end and forms a support element or fitting (5) at another end and/or has a connecting piece at several ends.

5. The corner connection according to one of the preceding claims, **characterized in that** the inner surface (10, 10', 10") of the hollow end (2) and the outer surface (9, 9', 9") of the connecting piece (4) form adhesive surfaces whose area is at least 50,000 mm².

6. The corner connection according to one of the preceding claims, **characterized in that** the connecting element (3) is hollow.

7. The corner connection according to one of the preceding claims, **characterized in that** the connecting piece (4) is U-shaped with three outer surfaces (9, 9', 9").

8. The corner connection according to the preceding claim, **characterized in that** the three outer surfaces (9, 9', 9") of the U-shaped connecting piece (4) serve as bonding surfaces.

9. The corner connection according to the preceding claim, **characterized in that** a hole (15) for introducing adhesive material is provided in a U-bottom (8) arranged between U-legs (7, 7') of the U-shaped conencting piece (4).

10. The corner connection according to one of the preceding claims, **characterized in that** the hollow end (2) has an inner longitudinal surface (11), on the outer longitudinal regions of which in each case a groove (12, 12') runs, which are dimensioned in such a way that edges of the connecting piece (4) come to rest in the grooves (12, 12') in such a way that the connecting piece (4) is arranged centered in the hollow end (2).

11. The corner connection according to claims 7 and 10, **characterized in that** the grooves (12, 12') are spaced apart from the inner surfaces (10, 10') of the hollow end (2) and the ends of the U-legs (7, 7') come to rest in the grooves (12, 12') of the hollow end (2).

12. A cableway cabin with a corner connection according to any of the preceding claims 1 to 11.

## Revendications

1. Raccordement d'angle entre des éléments de support d'une cabine de téléphérique, le raccordement d'angle comprenant un élément de support (1) qui est conçu comme une entretoise allongée avec une extrémité creuse (2), et le raccordement d'angle comprenant un élément de raccordement coudé (3) avec une pièce de raccordement (4) qui peut être introduite par complémentarité de forme dans l'extrémité creuse (2) de l'élément de support (1), **caractérisé en ce que en ce qu'**une forme intérieure de l'extrémité creuse (2) et une forme extérieure de la pièce de raccordement (4) sont réalisées de manière angulaire et sont prévues par complémentarité de forme au moins sur deux surfaces opposées l'une à l'autre, de telle sorte qu'il subsiste une fente (14, 14') entre la surface intérieure (10, 10') de l'extrémité creuse (2) et la surface extérieure (9, 9') de la pièce de raccordement (4), un matériau adhésif étant prévu dans la fente (14, 14').

2. Raccordement d'angle selon la revendication 1, **caractérisé en ce qu'**au moins une surface de l'extrémité creuse (2) ou de la pièce de raccordement (4) présente un trou débouchant sur au moins une fente (14, 14', 14") et servant à introduire du matériau adhésif.

3. Raccordement d'angle selon la revendication 1 ou 2, **caractérisé en ce que** la forme extérieure de la pièce de raccordement (4) et la forme intérieure de l'extrémité creuse (2) sont quadrangulaires.

4. Raccordement d'angle selon l'une des revendications précédentes, **caractérisé en ce que** l'élément de raccordement (3) présente la pièce de raccordement (4) à une extrémité et forme un élément de support ou une pièce de liaison (5) à une autre extrémité et/ou présente une pièce de raccordement à plusieurs extrémités.

5. Raccordement d'angle selon l'une des revendications précédentes, **caractérisé en ce que** la surface intérieure (10, 10', 10") de l'extrémité creuse (2) et la surface extérieure (9, 9', 9") de la pièce de raccordement (4) forment des surfaces d'adhérence dont l'aire est d'au moins 50,000 mm² .

6. Raccordement d'angle selon l'une des revendications précédentes, **caractérisé en ce que** l'élément de raccordement (3) est creux.

7. Raccordement d'angle selon l'une des revendications précédentes, **caractérisé en ce que** la pièce de raccordement (4) est en forme de U avec trois surfaces extérieures (9, 9', 9").

8. Raccordement d'angle selon la revendication précédente, **caractérisé en ce que** les trois surfaces extérieures (9, 9', 9") de la pièce de raccordement en U (4) servent de surfaces adhésives.

9. Raccordement d'angle selon la revendication précédente, **caractérisé en ce qu'**un trou (15) pour l'introduction de matériau adhésif est prévu dans un fond de U (8) disposé entre les branches de U (7, 7') de la pièce de raccordement en forme de U (4).

10. Raccordement d'angle selon l'une des revendications précédentes, **caractérisé en ce que** l'extrémité creuse (2) présente une surface longitudinale intérieure (11), sur les zones longitudinales extérieures de laquelle s'étend à chaque fois une rainure (12, 12'), qui sont dimensionnées de telle sorte que des bords de la pièce de raccordement (4) viennent se placer dans les rainures (12, 12') de telle sorte que la pièce de raccordement (4) soit disposée de manière centrée dans l'extrémité creuse (2).

11. Raccordement d'angle selon les revendications 7 et 10, **caractérisé en ce que** les rainures (12, 12') sont espacés des surfaces intérieures (10, 10') de l'extrémité creuse (2) et les extrémités des branches du U (7, 7') viennent se loger dans les rainures (12, 12') de l'extrémité creuse (2).

12. Cabine de téléphérique avec un raccordement d'angle selon l'une quelconque des revendications précédentes 1 à 11.
